# EUROPÄISCHE PATENTSCHRIFT

(11) **EP 3 149 224 B1**
(45) Veröffentlichungstag und Bekanntmachung des Hinweises auf die Patenterteilung: **24.07.2019**
(21) Anmeldenummer: 15723513.6
(22) Anmeldetag: 20.05.2015
(51) Int. Cl.: C23C 22/18, C23C 22/20, C23C 22/42, C23C 22/80, B32B 15/08

(54) **VERFAHREN ZUR HERSTELLUNG EINER SANDWICHSTRUKTUR, DIE HIERMIT HERGESTELLTE SANDWICHSTRUKTUR UND IHRE VERWENDUNG**
METHOD FOR PRODUCING A SANDWICH STRUCTURE, SANDWICH STRUCTURE PRODUCED THEREBY AND USE THEREOF
PROCÉDÉ DE FABRICATION D'UNE STRUCTURE SANDWICH, STRUCTURE SANDWICH FABRIQUÉE PAR LEDIT PROCÉDÉ, ET UTILISATION DE LADITE STRUCTURE

(30) Priorität: 28.05.2014 DE 102014007715
(43) Veröffentlichungstag der Anmeldung: 05.04.2017
(73) Patentinhaber: Chemetall GmbH, 60487 Frankfurt (DE); ThyssenKrupp Steel Europe AG, 47166 Duisburg (DE)
(72) Erfinder: KLÜPPEL, Ingo, 58239 Schwerte (DE); LEIMKÜHLER, Mark, 45663 Recklinghausen (DE); MAURUS, Norbert, 63225 Langen (DE); REISEWITZ, Sophie, 58239 Schwerte (DE); SCHÜLLERMANN, Gerrit, 63477 Maintal (DE)
(74) Vertreter: BASF IP Association
(86) Internationale Anmeldenummer: PCT/EP2015/061039
(87) Internationale Veröffentlichungsnummer: WO 2015/181004

(56) Entgegenhaltungen:
- EP-A2- 1 120 478
- WO-A1-2011/093282
- JP-A- 2003 138 382
- US-A- 4 659 395
- US-A1- 2003 194 608

## Beschreibung

Die Erfindung betrifft ein Verfahren zur Herstellung einer Sandwichstruktur auf Basis von mindestens einer Lage auf Basis von Kunststoff mit mindestens einer Lage auf Basis von metallischem Werkstoff wie z.B. Tafelblech, bei der eine spezielle haftungsvermittelnde und konversionsschützende Beschichtung auf mindestens einer Oberfläche vorgenommen wird, die derart hergestellte Sandwichstruktur sowie die Verwendung der derart hergestellten Sandwichstruktur.

Im Automobilbau und im Flugzeugbau, aber auch bei vielen anderen Konstruktionen werden heute metallische Komponenten insbesondere als tragende Teile eingesetzt. Das Gewicht derartiger Komponenten ist jedoch hoch und ist bei etlichen Anwendungen weiter zu verringern.

Ein Weg der Gewichtsverringerung ist die Verwendung von Sandwichstrukturen, bei denen ein Teil des üblicherweise schweren, aber mechanisch üblicherweise recht stabilen metallischen Werkstoffs durch organischen Werkstoff ersetzt ist und bei denen ein gut haftender Verbund in einer stabilen Konstruktion genutzt werden kann.

Besonders bevorzugte Sandwichstrukturen sind z.B. solche auf Basis von Metall-Kunststoff, Metall-Kunststoff-Metall oder Metall-Kunststoff-Metall-Kunststoff-Metall.

Die Beschichtung von metallischen Oberflächen aus Gründen des Korrosionsschutzes oder/und der Lackhaftung ist grundsätzlich aus vielen Publikationen bekannt. Hierfür werden vor allem Konversionsbeschichtungen eingesetzt. Hierbei wird vor allem unterschieden, ob Passivierungen (= Behandlungen), die längere Zeit oder auf Dauer vor allem ohne eine Lackschicht vor Korrosion schützen sollen, oder ob Vorbehandlungen vor einer weiteren Beschichtung wie z.B. einem Lack oder Klebstoff eingesetzt werden sollen.

EP 1 651 432 B1 lehrt ein Metalllaminat, das zwischen zwei äußeren Metallblechen eine Klebepolymerschicht umfasst, bei dem die Klebepolymerschicht Polyamid, ein Copolymer von Ethylen und einer ungesättigten Carbonsäure und/oder einem Derivat davon und ein reaktives Copolymer, das ein Styrol-Meleinsäureanhydrid-Copolymer umfasst, das ein Molekulargewicht von 1400 bis 10000 hat.

DE 102007046226 A1 betrifft ein Verbundbauteil aus einem ersten und zweiten Metallblech mit mindestens einer zwischen diesen angeordneten Polymerschaumschicht.

DE 2627681 A1 lehrt Phosphatierverfahren auf der Basis von saurer Metallphosphatlösung in Gegenwart eines wasserlöslichen Polymeren mit Monomereinheiten aus (Meth)acrylsäure oder/und (Meth)acrylamid.

US 3,721,597 betrifft Herstellverfahren von Laminaten auf Basis von Aluminiumplatten, Ethylen-Acrylsäure-Copolymer und HD-PE als innerer Lage.

WO 2011/093282 A1 offenbart ein Herstellungsverfahren von Laminaten auf Basis von einer Lage von Aluminumplatten, die mit einer Zinkphosphatierung-Lösung in Kontakt gebracht werden, und einer Lage von organischen Polymeren, wobei die derart beschichtete metallische Lage mit der Lage auf Basis von organischem Polymer durch Verpressen unter Druck von 50 Kg/cm² bei einer Temperatur von 250°C für eine Zeitdauer von 5 Minuten zu einer Laminat verbunden wird.

Im Vergleich zu ein- oder mehrschichtigen Lackierungen, die auf metallischen Substraten oft eine Dicke der einzelnen Lackschicht im Bereich von 1 bis 50 µm aufweisen, erfordern eine oder mehrere Lagen aus organischem Polymer (= Polymerlage), die für eine Sandwichstruktur verwendet werden und die als Lage aufgeklebt oder/und aufeinander gepresst werden, eine deutlich größere Dicke als eine Lackschicht, beispielsweise eine Dicke im Bereich von 0,1 bis 5 mm.

Eine hohe Haftung zwischen den einzelnen Lagen einer Sandwichstruktur ist für die Herstellung insbesondere einer steifigkeitsoptimierten Sandwichstruktur wie z.B. einer Metall-Kunststoff-Metall-Sandwichstruktur zwingend erforderlich. Sie wird bislang oft über eine nasschemische Applikation einer dünnen oberflächenaktivierenden oder/und haftvermittelnden Zwischenschicht auf der metallischen Oberfläche einer metallischen Lage und dem Aufschmelzen von insbesondere thermoplastischen Bestandteilen einer Polymerlage realisiert. Zum Aufbringen der oberflächenaktivierenden oder/und haftvermittelnden Zwischenschicht auf der metallischen Oberfläche einer metallischen Lage sind gesonderte Anlagendurchläufe zur Vorbehandlung z.B. eines Blechs in einer Bandbeschichtungsanlage notwendig. Beispielsweise erfordern verzinkte Stahlbleche je nach dem Herstellverfahren wie z.B. schmelztauchverzinktem Stahlblech Z oder elektrolytisch verzinktem Stahlblech ZE eine unterschiedliche Prozessführung, was zusätzlichen Aufwand bedingt. Andere Metallsubstrate können mit dem bisherigen Verfahren z.T. nur mit unzureichender Haftung der Lagen der Sandwichstruktur erzeugt werden. Während auf so ähnlichen metallischen Oberflächen wie auf ZE eine gewisse Haftung über eine saure Konversionszusammensetzung zur Ausbildung einer Konversionsschicht mit ca. 30 mg Ti pro m² erreicht wurde, wurde auf Z eine unzureichende Haftung erzielt. Eine ausreichend hohe Haftung konnte auf Z nur erreicht werden, wenn durch zusätzliche Prozessstufen mit einer ersten alkalischen Konversionszusammensetzung, weiterhin mit zusätzlichem Spülen mit Wasser und danach mit einer zweiten sauren Konversionszusammensetzung eine zweite Konversionsschicht mit ca. 30 mg Ti pro m² ausgebildet wurde. Wenn von Zeit zu Zeit die Art der Verzinkung gewechselt wurde, war das ein nicht hinnehmbarer Nachteil.

Darüber hinaus hatte die bisher eingesetzte Technik insbesondere bei feuerverzinkten Stahlblechen den Nachteil, dass der Metall-Kunststoff-Verbund bei einer Schälzugfestigkeitsprüfung nur eine begrenzte Haftung aufwies.

Aus diesem Grund sollten weitere nasschemische Konversionszusammensetzungen untersucht werden. Es wäre vorteilhaft, wenn das herkömmliche nasschemische Beschichtungsverfahren zur Oberflächenaktivierung oder/und Haftvermittlung an die eingesetzten Kunststoffe stärker angepasst werden könnte. Ziel war es, alternative nasschemische Konversionszusammensetzungen für alle gängigen Metallsubstrate und insbesondere für metallisch beschichtete Stahlsubstrate zu ermitteln. Ziel war es auch, metallische Lagen für eine Sandwichstruktur mit Hilfe einer dünnen haftvermittelnden Konversionsbeschichtung zu versehen, die als Zwischenschicht einer Sandwichstruktur dient, und hierbei eine Sandwich-Verbund-Haftung von mindestens 300N/4cm bei 4 cm Probenbreite, die 75N/cm in der Schälzugfestigkeitsprüfung nach ISO 11339, 2010, ergibt, zu erreichen.

Es bestand die Aufgabe, die Haftung zwischen der Oberfläche einer Lage auf Basis von organischen Polymeren wie z.B. einer KTL-temperaturstabilen Polymerlage und der Oberfläche einer metallischen Lage z.B. als Deckblech zu verbessern, um eine Sandwichstruktur insbesondere auf Basis von Metall-Kunststoff, Metall-Kunststoff-Metall, Kunststoff-Metall-Kunststoff, Metall-Kunststoff-Metall-Kunststoff oder Metall-Kunststoff-Metall-Kunststoff-Metall herzustellen. Besonders bevorzugt sind Sandwichstrukturen, insbesondere steifigkeitsoptimierte Metall-Kunststoff-Metall-Sandwichstrukturen, wie sie unter dem Markennamen Litecor® geplant sind.

Außerdem wäre es vorteilhaft, wenn die Prozesskomplexität des bestehenden Verfahrens zur Herstellung von Sandwichstrukturen durch Verringerung der Zahl von Anlagendurchläufen verbessert werden könnte und wenn auch die Badstabilität zur Vorbereitung der metallischen Oberfläche oder/und zur Haftvermittlung erhöht werden könnte und wenn auch die Zahl der Behandlungsstufen, die auf bestimmten metallischen Oberflächen nötig waren, verringert werden könnte.

Es wurde jetzt überraschend festgestellt, dass mit einer speziellen Konversionszusammensetzung eine einstufige und insbesondere wirtschaftliche Konversionsbeschichtung für alle technisch relevanten metallischen Oberflächen ausgeführt werden kann, die zu einer ausreichenden oder sogar zu einer unerwartet hohen Haftung des Metall-Kunststoff-Verbundes führt.

Die Aufgabe wird gelöst mit einem Verfahren zur Herstellung einer Sandwichstruktur aus mindestens einer Lage von metallischem Werkstoff und von mindestens einer Lage von organischem Polymer, dadurch gekennzeichnet, dass mindestens eine Oberfläche an mindestens einer metallischen Lage, die mit mindestens einer Lage von organischem Polymer verbunden werden soll, mit einer wässerigen Konversionszusammensetzung in Kontakt gebracht wird, die enthält:
0,5 bis 20 g/L Zink,
0,01 bis 10 g/L Mangan, 0,01 bis 10 g/L Aluminium, 0,01 bis 1 g/L Chrom(III), 0,01 bis 5 g/L Eisen(II), 0,01 bis 5 g/L Eisen(III) oder/und 0,01 bis 5 g/L Magnesium,
0 oder 0,01 bis 5 g/L der Summe an Nickel oder/und Kobalt,
0 oder 0,01 bis 5 g/L der Summe an Molybdän, Tantal, Vanadium oder/und Wolfram,
2 bis 100 g/L P₂O₅, die 2,68 bis 133,8 g/L PO₄ entsprechen,
0,1 bis 10 g/L Polyacrylsäure, jedoch nicht mehr als 25 % des Gehalts der Zusammensetzung an P₂O₅ in g/L, und
0 oder 0,01 bis 3 g/L Silan, jedoch nicht mehr als 25 % des Gehalts der Zusammensetzung an P₂O₅ in g/L,
dass der hiermit hergestellte Flüssigkeitsfilm aufgetrocknet wird,
dass die derart beschichtete metallische Lage gegebenenfalls geschnitten wird - insbesondere in Tafeln - und dass die derart beschichtete metallische Lage mit mindestens einer Lage auf Basis von organischem Polymer in Kontakt gebracht und durch Verpressen unter Druck oder/und Temperatur zu einer Sandwichstruktur verbunden wird.

Vorzugsweise ist das organische Polymer ein thermoplastisches Polymer oder/und ein thermoplastisches Copolymer.

Vor dem Beschichten von Oberflächen der metallischen Lagen werden die zu beschichtenden Oberflächen in der Regel gereinigt und danach mit Wasser gespült. Wenn metallische Lagen zwischengelagert werden, werden sie üblicherweise beölt. Wenn beölte Oberflächen zu behandeln sind oder auch dann, wenn die Anlage zumindest etwas durch Öl verunreinigt ist, empfiehlt es sich, die Oberflächen vor dem Beschichten insbesondere mit einem alkalischen Reiniger zu reinigen und danach mit Wasser zu spülen, um anhaftende Reinigungslösung von der Oberfläche zu entfernen. Denn eine nicht vollständig wasserbenetzbare Oberfläche kann eine ungleichmäßige no rinse-Beschichtung zur Folge haben.

Vor dem Auftrag der erfindungsgemäßen wässerigen Konversionszusammensetzung wird keine Aktivierung eingesetzt, denn es ist erwünscht, eine äußerst feinkörnige und gleichzeitig weitgehend oder völlig amorphe Phosphatbeschichtung und möglichst keine kristalline Phosphatbeschichtung zu erzeugen. Die resultierende Konversionsschicht ist vorzugsweise völlig röntgenamorph oder röntgenamorph mit geringen kristallinen Anteilen, was für eine Zinkphosphatschicht ungewöhnlich ist. Wichtig ist, dass die Oberfläche der metallischen Lage möglichst vollkommen und möglichst gleichmäßig mit der no rinse-Konversionszusammensetzung benetzt wird. Bei einer Applikation mit Hilfe von Walzen als Coaterwalzen oder/und als Abquetschwalzen ist der Zustand der Applikationswalzen sehr wichtig, da sie einen gleichmäßigen Nassfilm vorzugsweise im Bereich von 0,5 bis 10 ml/m² erzeugen sollen.

Das erfindungsgemäße Konversionsbeschichtungsverfahren erfolgt daher ohne einen Aktivierungsschritt mit einem kolloidalen Titanphosphat oder mit einem Oberflächenkonditionierungsmittel (Surface Conditioner) auf Basis von Phosphatpartikeln, was für eine typische Zinkphosphatierung ungewöhnlich ist. Auch dies ist ein Zeichen dafür, dass die erfindungsgemäße Konversionszusammensetzung und ihr Beschichtungsverfahren keine typische Zinkphosphatierung sind.

Vorzugsweise weist die wässerige Konversionszusammensetzung einen Gesamtgehalt an Mangan, Aluminium, Chrom(III), Eisen(II), Eisen(III) oder/und Magnesium im Bereich von 0,01 bis 8 g/L auf, besonders bevorzugt im Bereich von 0,1 bis 6 g/L, von 0,2 bis 5 g/L, von 0,3 bis 4 g/L, von 0,4 bis 3 g/L, von 0,5 bis 2 g/L oder von 0,6 bis 1 g/L.

Vorzugsweise weist die wässerige Konversionszusammensetzung folgende Zusammensetzung auf:
1 bis 10 g/L Zink,
0,5 bis 6 g/L Mangan, 0,01 bis 0,5 g/L Aluminium, 0,01 bis 0,8 g/L Chrom(III), 0,01 bis 1 g/L Eisen(II), 0,01 bis 1 g/L Eisen(III) oder/und 0,01 bis 1,5 g/L Magnesium,
   wobei die Summe dieser Elemente/Kationen ohne Zink vorzugsweise im Bereich von 0,01 bis 8 g/L liegt,
0 oder 0,01 bis 2,5 g/L Nickel, 0 oder 0,01 bis 2,5 g/L Kobalt, wobei die Summe an Nickel und Kobalt 0 ist oder im Bereich von 0,01 bis 4 g/L liegt,
0 oder 0,01 bis 5 g/L der Summe an Molybdän oder/und Vanadium,
8 bis 60 g/L P₂O₅, die 10,72 bis 80,28 g/L PO₄ entsprechen,
0,5 bis 5 g/L Polyacrylsäure, jedoch nicht mehr als 25 % des Gehalts der Zusammensetzung an P₂O₅ in g/L, und
0 oder 0,01 bis 3 g/L Silan, jedoch nicht mehr als 25 % des Gehalts der Zusammensetzung an P₂O₅ in g/L und auch keinen Gehalt an einem Komplexfluorid von Titan oder Zirkonium.

Besonders bevorzugt weist die wässerige Konversionszusammensetzung folgende Zusammensetzung auf:
2 bis 8 g/L Zink,
1 bis 5 g/L Mangan, 0,01 bis 0,2 g/L Aluminium, 0,01 bis 0,5 g/L Chrom(III), 0,01 bis 0,5 g/L Eisen(II), 0,01 bis 0,5 g/L Eisen(III) oder/und 0,01 bis 0,8 g/L Magnesium,
   wobei die Summe dieser Elemente/Kationen ohne Zink vorzugsweise im Bereich von 0,01 bis 8 g/L liegt,
0 oder 0,01 bis 2 g/L Nickel,
0 oder 0,01 bis 2 g/L Kobalt, wobei die Summe an Nickel und Kobalt nicht größer als 2,5 g/L ist,
0 oder 0,01 bis 5 g/L der Summe an Molybdän oder/und Vanadium,
9,5 bis 50 g/L P₂O₅, die 12,73 bis 66,9 g/L PO₄ entsprechen,
0,5 bis 3 g/L Polyacrylsäure, jedoch nicht mehr als 25 % des Gehalts der Zusammensetzung an P₂O₅ in g/L, und
0 oder 0,01 bis 2 g/L Silan jedoch nicht mehr als 25 % des Gehalts der Zusammensetzung an P₂O₅ in g/L, jedoch keinen Gehalt an einem Komplexfluorid von Titan oder Zirkonium.

Bevorzugt ist hierbei eine anfängliche wässerige Konversionszusammensetzung, bei der das Gewichtsverhältnis von Zink : PO₄ im Bereich von 0,02 : 1 bis 0,6 : 1, von 0,05 : 1 bis 0,5 : 1, von 0,08 : 1 bis 0,4 : 1 oder von 0,1 : 1 bis 0,2 : 1 bezogen auf die anfängliche Zusammensetzung vor einer Aufnahme von herausgebeiztem Zink, das sich in der sauren Lösung mit der Zeit anreichern kann.

Bevorzugt ist hierbei eine wässerige Konversionszusammensetzung, bei der das Gewichtsverhältnis von Zink : PO₄ im Bereich von 0,02 : 1 bis 8 : 1, von 0,05 : 1 bis 4 : 1, von 0,08 : 1 bis 1,5 : 1 oder von 0,1 : 1 bis 0,8 : 1 bezogen auf die Zusammensetzung, die bereits herausgebeiztes Zink zusätzlich im Einsatz z.B. auf verzinkten Oberflächen aufgenommen hat.

Das Gewichtsverhältnis der wässerigen Konversionszusammensetzung oder/und der hieraus hergestellten Beschichtung aus der Summe (Ni und Co) : Zn liegt vorzugsweise im Bereich von 0,0001 : 1 bis 1 : 1, von 0,002 : 1 bis 0,7 : 1, von 0,01 : 1 bis 0,4 : 1 oder von 0,04 : 1 bis 0,2 : 1. Je nach dem Gehalt an Nickel oder/und an Kobalt kann hierbei die Korrosionsbeständigkeit der hiermit hergestellten Konversionsbeschichtung beeinflusst werden.

Vorzugsweise beträgt der Zink-Gehalt der wässerigen Konversionszusammensetzung 1,5 bis 10 g/L, 2 bis 8 g/L oder 2,5 bis 4,5 g/L. Vorzugsweise beträgt der Mangan-Gehalt der wässerigen Konversionszusammensetzung 0,5 bis 6 oder 1 bis 5 g/L. Vorzugsweise beträgt der Nickel-Gehalt der wässerigen Konversionszusammensetzung nicht mehr als 1,5 g/L, nicht mehr als 1 g/L, nicht mehr als 0,5 g/L oder nicht mehr als 0,01 g/L. Das Zn : Mn-Gewichtsverhältnis der wässerigen Konversionszusammensetzung kann in weiten Grenzen schwanken und liegt vorzugsweise im Bereich von 0,1 : 1 bis 5 : 1 oder von 0,8 : 1 bis 3 : 1.

Die wässerige Konversionszusammensetzung kann gegebenenfalls auch 0,001 bis 1 g/L NO₂, 0,01 bis 1 g/L NO₃ oder/und 0,001 bis 2 g/L H₂O₂ als Beschleuniger enthalten.

Ein Zusatz an Polyacrylsäure zur wässerigen Konversionszusammensetzung hat sich bewährt, weil hiermit deutlich verbesserte Haftungsergebnisse erzielt werden, was ohne Polyacrylsäure bisher nicht gelungen war. Ein Zusatz von Polyacrylsäure gibt der Konversionsbeschichtung eine höhere Haftfestigkeit, die sich insbesondere bei Werkstoffen auf Basis von Polyethylen oder/und Polyamid positiv auswirkt. Hierbei ist es empfehlenswert, eine wasserlösliche oder wasserdispergierbare Polyacrylsäure der Konversionszusammensetzung zuzusetzen. Die Polyacrylsäure weist vorzugsweise ein Molekulargewicht im Bereich von 5.000 bis 120.000, von 30.000 bis 90.000 oder von 50.000 bis 70.000 auf. Die Konversionszusammensetzung weist vorzugsweise einen Gehalt an mindestens einer wasserlöslichen oder wasserdispergierbaren Polyacrylsäure im Bereich von 0,2 bis 8 g/L, von 0,3 bis 5 g/L oder von 0,5 bis 3 g/L auf. Die Zugabe von Polyacrylsäure hat sich bei allen verschiedenen metallischen Oberflächen auf die Haftung einerseits zur metallischen Oberfläche und andererseits zur mit organischem, insbesondere thermoplastischem, Kunststoff benetzten Oberfläche positiv ausgewirkt. Vorzugsweise beträgt der Gehalt der aufgetrockneten oder/und der aufgetrockneten und beim Verpressen thermisch belasteten Konversionsbeschichtung an Polyacrylsäure oder/und ihren Reaktionsprodukten 0,05 bis 15 Gew.-% der Konversionsbeschichtung.

Wenn der Konversionszusammensetzung zusätzlich mindestens ein Silan zugesetzt wird, kann die Haftung zwischen benachbarten Lagen einer Sandwichstruktur, hier gemessen als Schälzugfestigkeit, noch um bis zu etwa 25 % weiter verbessert werden.

Wenn der Gehalt der wässerigen Konversionszusammensetzung an Polyacrylsäure sukzessive erhöht wird und schließlich etwa 25 % des Gehalts an P₂O₅ in g/L überschreitet, kann es dazu kommen, dass keine weitere Erhöhung der Schälzugfestigkeit der Sandwichstruktur als bei geringeren Gehalten oder sogar eine etwas geringere Schälzugfestigkeit erzielt wird.

Wenn der Gehalt an Polyacrylsäure in der wässerigen Konversionszusammensetzung etwa 2 % des Gehalts an P₂O₅ in g/L unterschreitet, kann es dazu kommen, dass eine deutliche Verschlechterung der Schälzugfestigkeit der Sandwichstruktur im Vergleich zu höheren Gehalten an Polyacrylsäure auftritt.

Der Einfachheit halber wird bei Silan, Silanol und Siloxan im Folgenden oft nur von Silan gesprochen. Denn Silan/Silanol/Siloxan unterliegt oft auch in Wasser einer schnellen Reaktionsfolge, so dass aufgrund der Veränderungen und aufgrund des großen Aufwands eines geeigneten Nachweises des Zustandes eine Bestimmung und eine präzisere Angabe keinen Sinn machen.

Als Silane sind grundsätzlich viele Arten einzeln oder in Kombination miteinander möglich. Sie werden vorzugsweise in einem wasserlöslichen oder wassergelösten Zustand eingesetzt. Besonders bevorzugt sind sie teilweise oder vollständig hydrolysiert.

Besonders bevorzugt sind Konversionszusammensetzungen mit einem Gehalt an mindestens einem Aminosilan mit mindestens einer Aminogruppe und an mindestens einem hierzu unterschiedlichen Aminosilan mit mindestens zwei Aminogruppen, an mindestens einem Aminosilan und an mindestens einem Epoxysilan, mit einem Gehalt an mindestens einem Aminosilan und an mindestens einem Bis-silyl-silan, mit einem Gehalt an mindestens einem Ureidosilan und an mindestens einem Bis-silyl-silan oder mit einem Gehalt an mindestens einem Epoxysilan und an mindestens einem Bis-silyl-silan.

Besonders bevorzugt sind Silane mit jeweils mindestens einer Amino-, Epoxy-, Glycidoxy-, Imino- oder/und Ureidogruppe. Besonders bevorzugt sind Mono-Trialkoxysilane, Bis-Trialkoxysilane, Mono-silyl-silane oder/und Bis-silyl-silane, wobei diese besonders bevorzugt jeweils mindestens eine Amino-, Epoxy-, Glycidoxy-, Imino- oder/und Ureidogruppe aufweisen.

Die Konversionszusammensetzung weist vorteilhafterweise einen Gesamtgehalt an mindestens einem Silan im Bereich von 0,0-1 bis 4, von 0,1 bis 3, von 0,3 bis 2,5 oder von 0,6 bis 2 g/L auf.

Wenn der Gehalt der wässerigen Konversionszusammensetzung an Silan(en) in g/L etwa 25 % des Gehalts an P₂O₅ in g/L überschreitet, kann es dazu kommen, dass sich die Haftung verschlechtert. Wenn der Gehalt der wässerigen Konversionszusammensetzung an Silan(en) in g/L etwa 2 % des Gehalts an P₂O₅ in g/L unterschreitet, kann es dazu kommen, dass sich die Haftung verschlechtert.

Wenn der Gehalt der wässerigen Konversionszusammensetzung an Polyacrylsäure in g/L etwa 25 % des Gehalts an P₂O₅ in g/L überschreitet, kann es dazu kommen, dass sich die Haftung verschlechtert.

Wenn der Gehalt der wässerigen Konversionszusammensetzung an Polyacrylsäure in g/L etwa 2 % des Gehalts an P₂O₅ in g/L unterschreitet, kann es dazu kommen, dass sich die Haftung verschlechtert.

Vorzugsweise beträgt der Gehalt der aufgetrockneten oder/und der aufgetrockneten und beim Verpressen thermisch belasteten Konversionsbeschichtung an mindestens einem Silan oder/und seinen/ihren Reaktionsprodukten 0,01 bis 15 Gew.-% der Konversionsbeschichtung.

Es hat sich jedoch bei manchen Versuchen angedeutet, dass der Gehalt der wässerigen Konversionszusammensetzung an Polyacrylsäure vorzugsweise nicht mehr als 25, nicht mehr als 20, nicht mehr als 15 oder nicht mehr als 10 % des Gehalts der Zusammensetzung an P₂O₅ in g/L enthalten sollte. Es kann dann u.U. keine weitere Verbesserung der Schälzugfestigkeit im Vergleich zu Polyacrylsäure-ärmeren Zusammensetzungen erzielt werden.

Es hat sich jedoch bei manchen Versuchen angedeutet, dass der Gehalt der wässerigen Konversionszusammensetzung an mindestens einem Silan vorzugsweise nicht mehr als 25, nicht mehr als 20, nicht mehr als 15 oder nicht mehr als 10 % des Gehalts der Zusammensetzung an P₂O₅ in g/L enthalten sollte. Es kann dann u.U. keine weitere Verbesserung der Schälzugfestigkeit im Vergleich zu Silan-ärmeren Zusammensetzungen erzielt werden.

Die wässerige Konversionszusammensetzung kann vorzugsweise auch 0,001 bis 20 g/L oder 0,2 bis 10 g/L an mindestens einem weiteren wasserlöslichen oder/und wasserdispergierbaren organischen Polymer/Copolymer neben Polyacrylsäure enthalten.

Falls darüber hinaus der wässerigen Konversionszusammensetzung auch noch mindestens ein weiteres organisches Polymer/Copolymer zugesetzt wird, wird dieses vorzugsweise aus säurestabilen Polymeren oder/und Copolymeren, die gegebenenfalls spezifisch stabilisiert sind, ausgewählt. Hierzu gehören insbesondere säurestabile Polymere oder/und Copolymere ausgewählt aus solchen auf der Basis von Poly(meth)acrylat, Polyacrylamid, Polycarbonat, Polyepoxid, Polyester, Polyether, Polyethylen, Polystyrol, Polyurethan, Polyvinyl, Polyvinylpyrrolidon und deren Modifizierung(en) wie z.B. kationischem Polyurethanharz, modifiziertem anionischen Acrylat/Polyacrylat, Epoxidharz mit Aminogruppen und gegebenenfalls auch mit Phosphatgruppen oder/und kationisches Copolymer auf der Basis von PolyesterPolyurethan, Polyester-Polyurethan-Poly(meth)acryl, Polycarbonat-Polyurethan oder/und Polycarbonat-Polyurethan-Poly(meth)acryl.

Hierbei kann es von Vorteil sein, wenn die Konversionszusammensetzung auch einen Gehalt an mindestens einem weiteren organischen Polymer/Copolymer und an mindestens einem Silan/Silanol/Siloxan enthält. Denn diese Zusätze können beispielsweise dazu beitragen, dass die Haftfestigkeit erhöht wird.

Vorzugsweise enthält die wässerige Konversionszusammensetzung und gegebenenfalls auch die entsprechende Konversionsbeschichtung in vielen Ausführungsformen keinen Gehalt an Bor, Chrom(VI), Hafnium, Titan, Zirkonium oder/und Niob oder keinen Gehalt an einer absichtlich zugesetzten Verbindung von Bor, Chrom(VI), Hafnium, Titan, Zirkonium, Niob oder von Aluminium, Bor, Chrom(VI), Hafnium, Titan, Zirkonium, Niob, Tantal, Vanadium oder/und Wolfram oder keinen Gehalt an einer absichtlich zugesetzten Verbindung von Bor, Chrom(VI), Hafnium, Titan, Zirkonium, Niob, Tantal oder/und Wolfram. Insbesondere ist es bevorzugt, dass sie keinen Gehalt an einem Komplexfluorid insbesondere von Aluminium, Bor, Silicium, Hafnium, Titan oder/und Zirkonium enthält. In vielen Varianten enthält die erfindungsgemäße wässerige Konversionszusammensetzung keinen Gehalt an anderen organischen Polymeren und Copolymeren außer an Polyacrylsäure, an einem Vernetzer, an einem Photoinitiator oder/und an einer Chrom(III)-Verbindung. Vorzugsweise enthält die erfindungsgemäße Konversionszusammensetzung keinen Gehalt an metallischen oder/und anorganischen Partikeln, insbesondere an solchen Partikeln größer 0,1 µm.

Bei dem Konversionsbeschichtungsverfahren kann der pH-Wert der Konversionszusammensetzung im Bereich von 1 bis 5 liegen, vorzugsweise im Bereich von 2,2 bis 4,5, besonders bevorzugt im Bereich von 2,8 bis 4.

Besonders bevorzugt wird bei dem erfindungsgemäßen Verfahren als anorganische wässerige Basiszusammensetzung eine gewählt, die es ermöglicht, mit der wässerigen Konversionszusammensetzung eine sogenannte Mikrophosphatierung auszuführen. Von Mikrophosphatierung wird hierbei insbesondere dann gesprochen, wenn das Schichtgewicht der Konversionsbeschichtung kleiner oder gleich 0,4 g/m² oder kleiner oder gleich 0,3 g/m² ist. Daher wird bei dem erfindungsgemäßen Verfahren vorzugsweise eine Konversionsbeschichtung mit einem Schichtgewicht von bis zu 0,4 g/m² gebildet. Hierbei liegt das Zinkphosphat vorzugsweise zumindest teilweise röntgenamorph vor, denn es wird keine typische Zinkphosphatierung durchgeführt.

Die erfindungsgemäße Phosphat-reiche Konversionsbeschichtung kann in vielen Ausführungsvarianten weitgehend oder gänzlich amorph ausgebildet sein und weitaus feiner als eine typische feinkristalline Zinkphosphatschicht sein. Bei der erfindungsgemäßen Konversionsbeschichtung sind weder Partikel, noch feinste Hohlräume mit bloßem Auge zu erkennen, so dass diese Beschichtung im Vergleich zu einer typischen "normalen" Zinkphosphatschicht einen weitaus gleichmäßigeren und geschlosseneren Eindruck macht. Dies gelingt oft nur, wenn keine Aktivierung und keine Oberflächenkonditionierung vor der Konversionsbeschichtung genutzt wurde, wenn der Nassfilm der wässerigen Konversionszusammensetzung auf der Oberfläche der metallischen Lage homogen ausgebildet wurde und wenn die Kontaktzeiten mit der wässerigen Konversionszusammensetzung bis zum vollständigen Auftrocknen vergleichsweise kurz waren, insbesondere kleiner als 1 Minute waren. Denn die Aktivierung oder Oberflächenkonditionierung vor einer Phosphat-reichen Konversionszusammensetzung dient zur Belegung der zu beschichtenden Oberflächen mit Saatkristallen zum Ausbilden von Phosphatkristallen.

Eine typische Zinkphosphatierung wird mit einer Aktivierung oder Oberflächenkonditionierung der metallischen Oberfläche eingeleitet und bedingt eine längere Kontaktzeit der Zinkphosphatlösung mit der metallischen Oberfläche, nämlich üblicherweise je nach Applikationsart durch Sprühen oder/und Tauchen und je nach Substratart als Band oder Teile zwischen 3 s und etwa 5 min. Hierbei werden üblicherweise Badtemperaturen im Bereich von 50 bis 70 °C und Substrattemperaturen im Bereich von 15 bis 40 °C genutzt. Beim typischen Zinkphosphatieren wird außer bei Band nicht abgequetscht. Beim typischen Zinkphosphatieren wird nicht aufgetrocknet, wird aber gespült. Aufgrund aller dieser Maßnahmen wird die Phosphatschicht einer typischen Zinkphosphatierung üblicherweise in Kristallen von etwa 5 bis 40 µm ausgebildet. Ihr Schichtgewicht liegt hierbei typischerweise im Bereich von 1 bis 25 g/m².

Bei dem erfindungsgemäßen Konversionsbeschichtungsverfahren ist es bevorzugt, die erfindungsgemäße wässerige Konversionszusammensetzung 0,1 bis 30 s mit der metallischen Oberfläche insbesondere eines Bandes bis zur Wasserfreiheit beim Auftrocknen in Kontakt zu bringen, wobei die Temperaturen der metallischen Oberfläche und des Bandes vorzugsweise im Bereich von 15 bis 40 °C liegen. Aufgrund des Weglassens einer Aktivierung oder Oberflächenkonditionierung und aufgrund der kürzeren Kontaktzeiten und der gegebenenfalls auch geringeren Temperaturen wird die Kristallisation des Zinkphosphats weitgehend oder gänzlich unterbunden, so dass es vorwiegend oder gänzlich amorph vorliegt und viel feiner vorliegt als bei einer kristallinen Zinkphosphatschicht. Diese Eigenschaften kennzeichnen ebenfalls die Mikrophosphatierung.

Außerdem ist es in vielen Ausführungsvarianten bevorzugt, dass der aufgebrachte Flüssigkeitsfilm aufgetrocknet wird, ohne dabei und ohne danach mit wässeriger Flüssigkeit zu spülen. Alternativ kann mit Wasser oder mit einer wässerigen Lösung z.B. eines Salzes oder/und einer anderen Verbindung gespült werden, z.B. um die Haftung noch weiter zu verbessern.

Bei dem erfindungsgemäßen Konversionsbeschichtungsverfahren können die Oberflächen der metallischen Lage vorzugsweise bei einer peak-metal-Temperatur PMT im Bereich von 5 bis 50 °C beschichtet werden, insbesondere bei 15 bis 40 °C. Die wässerige Konversionszusammensetzung kann beim Zeitpunkt des Applizierens eine Temperatur im Bereich von 15 bis 50 °C oder von 20 bis 40 °C, aufweisen, wobei bei Temperaturen über 40 °C darauf zu achten ist, ob gegebenenfalls Ausfällungen in der Konversionszusammensetzung auftreten.

Bei dem erfindungsgemäßen Konversionsbeschichtungsverfahren liegen die Kontaktzeiten bis zur Wasserfreiheit beim Auftrocknen auf Oberflächen der metallischen Lage vor allem bei metallischem Band oder metallischem Coil insbesondere bei 0,2 bis 30 Sekunden. Im Falle eines Aufwalzens oder/und Aufsprühens am Band kann die Zeit des Kontaktierens bis zur Wasserfreiheit u.U. auf weniger als 1 Sekunde oder auf bis zu etwa 0,2 Sekunden verringert werden. Insbesondere an einem konversionsbeschichteten metallischen Band oder Coil kann die Trocknung beispielsweise im beheizten Luftstrom, durch Induktion oder/und durch IR- oder/und NIR-Wärmestrahlung erfolgen. Die Konversionsbeschichtung der metallischen Lage erfolgt vor dem Zusammenführen dieser Lage mit mindestens einer Polymerlage zum Verpressen zu einer Sandwichstruktur.

Die Polymerlagen können beispielsweise eine Dicke im Bereich von 0,1 bis 5 mm, von 0,2 bis 4 mm, von 0,4 bis 3 mm, von 0,6 bis 2 mm, von 0,7 bis 1,2 mm oder von etwa 0,8 mm pro Lage aufweisen. Sie bestehen vorzugsweise aus kompaktem Kunststoff und nicht aus Kunststoffschaum.

Als Polymerlage kann beispielsweise ein Kunststoff-Coil eingesetzt werden. Bei feuchtigkeitsempfindlichen Kunststoffen wird es gegebenenfalls in Folie vakuumeingeschweißt gelagert. Die Folie ist zum Verpressen von der Polymerlage zu entfernen. Viele Polypropylen-basierte Kunststoffe weisen keine Feuchtigkeitsempfindlichkeit auf. Viele Arten der Polymerlagen und auch die metallische Lagen sind üblicherweise nicht weiter vorzubehandeln. Die Polymerlagen und die metallischen Lagen können oft nach dem Zusammenführen und Aneinanderlegen in vorteilhafter Weise ohne vorheriges Erhitzen verpresst werden.

Zwei Ausführunsvarianten, wie Laminieranlagen aufgebaut sein können und wie sie funktionieren können, werden beispielhaft in WO 2009/043777 A2 beschrieben.

Wenn etliche Lagen aus Metall und aus Kunststoff für die Herstellung einer Sandwichstruktur verwendet werden, ist es bevorzugt, dass einerseits mindestens zwei, mindestens drei oder mindestens vier metallische Lagen aus Metall oder/und metallischer Legierung oder/und metallische Lagen mit mindestens einer zusätzlichen Metall- oder Legierungsschicht wie z.B. verzinkter Stahl oder/und andererseits mindestens zwei oder mindestens drei Polymerlagen (= Polymerlagen), die gegebenenfalls auch auf mindestens einer Seite beschichtet oder/und besonders behandelt wie z.B. durch Beflämmen, UV-Behandlung, Corona-Behandlung oder Plasma-Behandlung polarisiert sein können, verwendet werden. Hierbei ist es besonders bevorzugt, dass jeweils eine metallische Lage mit einer Polymerlage abwechselt.

Hierbei können beispielsweise folgende Abfolgen von Lagen auftreten, wobei dann, wenn zwei Polymerlagen aneinandergrenzen, sowohl gleichartige, als auch unterschiedliche Kunststoffe bzw. Polymerlagen mit gleichen oder unterschiedlichen Abmessungen oder/und Eigenschaften unabhängig voneinander eingesetzt werden können: Metall-Kunststoff, Metall-Kunststoff-Metall, Metall-Kunststoff-Kunststoff, Metall-Kunststoff-Kunststoff-Metall, Metall-Kunststofif-Kunststofif-Kunststofif-Metall, Metall-Kunststoff-Metall-Kunststoff- Kunststoff, Kunststoff-Kunststoff-Metall-Kunststoff, Kunststoff-Kunststoff- Metall-Kunststoff-Kunststoff, Metall-Kunststoff-Kunststoff-Metall-Kunststoff, Metall-Kunststoff-Kunststoff-Metall-Kunststoff-Kunststoff, Kunststoff-Metall-Kunststoff-Kunststoff-Metall-Kunststoff, Kunststoff-Metall-Kunststoff-Kunststoff-Metall-Kunststoff-Kunststoff, Kunststoff-Kunststoff-Metall-Kunststoff-Kunststoff-Metall-Kunststoff-Kunststoff, Metall-Kunststoff-Kunststoff-Metall-Kunststoff-Metall oder Metall-Kunststoff-Kunststoff-Metall-Kunststoff-Kunststoff-Metall.

Hierbei sind auch kompliziertere Strukturen, Strukturen mit Einlagerungen oder/und Strukturen ohne durchgängige Lagen oder/und mit Hohlräumen herstellbar, wobei diese Besonderheiten jeweils eine oder mehrere metallische Lagen oder/und jeweils eine oder mehrere Polymerlagen betreffen können. Besonders bevorzugt ist jedoch, dass die Polymerlagen oder/und die metallischen Lagen keine Hohlräume oder/und möglichst keine Poren aufweisen.

Für die Herstellung von Sandwichstrukturen aus einer oder mehreren metallischen Lagen wie z.B. aus metallischem Coil oder Blechabschnitten und aus einer oder mehreren Polymerlagen aus organischem, insbesondere thermoplastischem, Polymer wie z.B. Kunststoff-Coil oder Polymerabschnitten eignen sich insbesondere das Kleben oder/und das Verpressen unter Druck oder/und Temperatur als Fügeverfahren.

Als Polymerlagen, insbesondere auch als Polymerkernlagen zwischen metallischen Lagen, eignen sich viele Arten von organischen Polymeren, wobei besonders temperaturstabile oder/und mechanisch belastbare Lagen bevorzugt sind. Bevorzugt sind hierbei Polymerlagen aus einem organischen Verbundwerkstoff (= Compound) mit Anteilen aus verschiedenen Kunststoffen. Als Lagen aus organischem Polymer können insbesondere Lagen aus Thermoplasten, aus Kunststoffen mit einem Anteil an Thermoplasten oder/und aus faserverstärkten Thermoplasten eingesetzt werden. Wenn mindestens drei Polymerlagen miteinander im Kontakt eingesetzt werden, kann die mindestens eine mittlere Lage alternativ auch aus einem Kunststoff mit einem Anteil an Thermoplasten von weniger als 50 Gew.-% oder sogar aus Duroplasten bestehen, gegebenenfalls jeweils auch faserverstärkt.

Als Kunststoffe bzw. Thermoplaste eignen sich hierbei insbesondere solche auf Basis von Polyamid, Polyethylen oder/und Polypropylen, die gegebenenfalls insbesondere mit Aramid-, Glas-, Kohle- oder/und Graphit-Fasern faserverstärkt sein können. Vorzugsweise ist die Lage aus organischem Polymer eine auf Basis von mindestens einem Thermoplasten und insbesondere eine auf Basis von Kunststoff auf Basis von Polyamid, Polyethylen oder/und Polypropylen, die gegebenenfalls auch faserverstärkt sein kann. Besonders bevorzugt sind gegebenenfalls faserverstärkte Thermoplaste auf Basis von Polyamid, Polyamid und Polyethylen oder Polyamid und Polypropylen. Insbesondere können Polymerlagen aus einem Verbundwerkstoff (Compound) mit einem Anteil an PA 6 oder/und PE eingesetzt werden, das heißt aus einem Polyamid auf Basis von ε-Caprolactam bzw. ω-Aminocapronsäure oder/und aus Polyethylen, der gegegenenfalls auch faserverstärkt sein kann. Besonders bevorzugt ist ein organischer Verbundwerkstoff aus PA 6 mit einem Anteil an PE, das heißt aus einem Polyamid auf Basis von ε-Caprolactam oder/und ω-Aminocapronsäure und von Polyethylen.

Diese organischen Materialien sind besonders bevorzugt, weil sie temperaturstabil oder/und mechanisch belastbar sind. Diese Verbundwerkstoffe können vorzugsweise Additive wie z.B. Stabilisatoren, Haftvermittler oder/und Verbindungen mit Haftgruppen enthalten. Diese organischen Verbundwerkstoffe können vorzugsweise so hergestellt sein, dass die organischen Verbundwerkstoffe oder Lagen aus diesen organischen Verbundwerkstoffen vorzugsweise völlig porenfrei sind und daher kein Schaum sind oder/und bei einer Temperatur bis etwa 100 °C tiefziehfähig oder/und bei Raumtemperatur oder gegebenenfalls bis zu 220 °C umformbar sind.

Hierbei empfiehlt sich für die großtechnische Herstellung, als metallisches Ausgangsmaterial Band, insbesondere als Coil oder als geschnittenes Blech, zu verwenden, das z.B. im Coil-Coating-Verfahren beschichtet wird oder wurde und das mit mindestens einer Lage aus einem Kunststoff verbunden wird.

Besonders bevorzugt sind metallische Substrate als Coil, Band oder/und Blech, die häufig eine Dicke der Lage insbesondere im Bereich von 0,1 bis 2 mm aufweisen und gegebenenfalls mit einer metallischen Schutzschicht oder/und mit mindestens einer Schutzschicht z.B. auf Basis von Haftvermittler-, Passivierungs- oder Vorbehandlungsschicht beschichtet sein können. Als guter Kompromiss zwischen Gewicht und Eigenschaften der Sandwichstruktur hat sich die Verwendung eines Bandes/Coils/Bleches mit einer Dicke etwa im Bereich von 0,05 bis 1 oder von 0,1 bis 0,5 mm, vorzugsweise von 0,2 bis 0,3 mm gezeigt. Metallische Beschichtungen, die anstelle einer metallischen Lage oder auf einer metallischen Lage verwendet werden, können hierbei eine Dicke im Bereich von 1 bis 80 µm aufweisen.

Als metallische Oberflächen kommen insbesondere solche von Aluminium, Eisen, Magnesium, Titan, Zink, Zinn und deren Legierungen in Frage. Als metallische Substrate werden insbesondere solche auf Basis von Aluminium, Eisen/Stahl/Edelstahl, Magnesium, Titan, Zink, Zinn und deren Legierungen eingesetzt. Als Beschichtung einer metallischen Lage kann beispielsweise Metall wie z.B. technisches Zink, eine Aluminium, Magnesium oder/und Zink enthaltende Legierung wie z.B. eine ZnMg-Legierung oder eine Verchromung insbesondere auf Stahl verwendet werden.

Als metallische Bänder, Coils oder/und Bleche und insbesondere zur Verwendung als Deckbleche können vor allem solche metallischen Lagen zum Einsatz kommen, die gegebenenfalls mit einer metallischen Schicht oder/und mit mindestens einer Schutzschicht z.B. auf Basis von Haftvermittler-, Passivierungs- oder Vorbehandlungsschicht beschichtet sein können, und die aus einem der folgenden Werkstoffe sind: Elektrolytisch verzinktes Stahlblech ZE, z.B. elektrolytisch mit einer Magnesium oder/und Zink enthaltenden Legierung wie z.B. mit ZnNi, ZnCo, ZnMg beschichtetes Stahlblech, schmelztauchverzinktes Stahlblech Z, durch Schmelztauchen in eine aufgeschmolzene Aluminium- oder/und Zink-haltige Legierung wie z.B. einer mit Al-, ZnAl-, ZnMg- oder/und ZnAlMg-Legierung beschichtetes Stahlblech, verchromtes Blech wie z.B. verchromtes Stahlblech, Blech aus Aluminium, Aluminiumlegierung, Magnesium, Magnesiumlegierung oder/und Edelstahl. Falls eine metallische Lage beschichtet ist, kann sie einseitig oder beidseitig beschichtet sein. Diese Beschichtungen können je nach Seite in ihrer Dicke, Ausprägung oder/und Zusammensetzung unterschiedlich oder gleichartig sein und können beispielsweise auch auf einer metallischen Beschichtung zusätzlich noch mindestens eine Konversionsschicht oder/und Passivierungsschicht aufweisen.

Es können auch Lagen aus verschiedenen Werkstoffen miteinander kombiniert werden, beispielsweise eine obere Lage aus einem Edelstahlblech mit einer unteren Lage aus verzinktem Stahlblech oder z.B. bei einer Kombination Metall-Kunststoff-Metall-Kunststoff-Metall außen Edelstahlbleche und als mindestens eine mittlere Lage ein verzinktes Stahlblech oder/und zwei unterschiedliche Kunststoff-Arten oder/und Polymerlagen mit unterschiedlichen Eigenschaften.

Das erfindungsgemäße Verfahren ist besonders vorteilhaft, wenn an dieser Stelle im Verfahren nach dem Zusammenführen und Aneinanderlegen von mindestens einer metallischen Lage mit mindestens einer Polymerlage zum Verpressen zu einer Sandwichstruktur nur noch das Verpressen notwendig ist. Vorzugsweise werden Tafeln oder Coils als Polymerlagen und als metallische Lagen zum Verpressen eingesetzt, was die Art, Bauform und Größe der Anlage beeinflusst. Das Verpressen kann bei Verwendung von Coils aus Kunststoff und aus metallischem Werkstoff vorzugsweise kontinuierlich erfolgen, beim Verpressen von Tafeln oft diskontinuierlich z.B. in einer Doppelbandpresse. Insbesondere bei kontinuierlichen Verfahren kann gegebenenfalls ein Vorwärmen der einzelnen oder zusammengeführten Lagen hilfreich sein. Für ein kontinuierliches Verpressen kann vorzugsweise eine Anlage genutzt werden, bei der die Pressbacken des Presswerkzeugs für die Presszeit stehen bleiben oder bei geringer Geschwindigkeit mit der Transportgeschwindigkeit der Bandanlage mitlaufen.

Das Verpressen der aneinandergelegten metallischen Lagen und Polymerlagen erfolgt vorzugsweise bei Temperaturen des Presswerkzeugs und insbesondere der Pressbacken im Bereich von 100 bis 260 °C, insbesondere von 120 bis 240 °C. Hierbei ist es bevorzugt, die Temperatur der Pressbacken möglichst konstant zu halten. Beim Verpressen können die eben gestalteten und parallel zueinander geführten beheizten Pressbacken in einer besonders bevorzugten Verfahrensvariante für eine bestimmte Zeitdauer an die ebene Struktur aus den aneinander liegenden Lagen gepresst werden, ohne dass die Pressbacken abgehoben werden. Die Pressdauer beträgt vorzugsweise 5 s bis 20 min, 10 s bis 8 min oder 30 s bis 8 min, wobei beim Verpressen von insgesamt mehr als zwei Lagen eher eine längere Pressdauer oder/und eine geringfügig erhöhte Temperatur genutzt wird/werden. Beim Verpressen ist auf ein ausreichend langes Einwirken von Wärme bei oder oberhalb der Schmelztemperatur von mindestens einer organischen, insbesondere thermoplastischen, Komponente eines Compounds oder des insbesondere thermoplastischen Kunststoffs der Polymerlage zu achten. Vorzugsweise wird die Schmelztemperatur von mindestens einer Komponente des Compounds oder des insbesondere thermoplastischen Kunststoffs der Polymerlage über mindestens 5 s oder/und bis zu 10 min erreicht oder überschritten. Die Schmelztemperatur von mindestens einer Komponente des Compounds oder des Kunststoffs der Polymerlage liegt häufig im Bereich von 150 bis 260 °C oder von 200 bis 250 °C. Der Kunststoff der Polymerlage schmilzt hierbei zumindest teilweise auf, lagert sich fest an die konversionsbeschichte Oberfläche der metallischen Lage an und verbindet sich haftfest mit ihr. Der Pressdruck liegt beim Verpressen vorzugsweise im Bereich von 0 bis 10 bar oder bei 2 bis 8 bar. Bei dem erfindungsgemäßen Verfahren ist es notwendig, dass die mindestens eine metallische Lage auf der Oberfläche, die mit Kunststoff verbunden werden soll, eine Beschichtung der erfindungsgemäßen Konversionsbeschichtung aufweist, die dort als Haftvermittler und an den zukünftigen Schnittkanten auch als Korrosionschutz wirkt. Denn es wurde gefunden, dass der Kantenschutz generell besser ausfällt, wenn die Haftung der erfindungsgemäßen Beschichtung erhöht ist.

Wenn die Pressbacken am Ende des Pressvorganges abgehoben werden, kann die Sandwichstruktur abgekühlt werden, durch natürliche Abkühlung oder/und durch Zwangskühlung z.B. mit kühler Luft. Bis zum Beginn des Aufwickelns eines zusammenlaminerten Coils oder bis zum Stapeln von zusammenlaminierten Tafeln sollte die Temperatur üblicherweise 90 °C unterschreiten.

Wenn die metallischen Coils (Bänder) mit der erfindungsgemäßen Konversionszusammensetzung beschichtet und getrocknet sind, können sie bei Bedarf insbesondere in Tafeln geschnitten werden, die zu einem späteren Zeitpunkt mit den Polymerlagen verpresst werden können, oder die Coils (Bänder) werden kontinuierlich - insbesondere auf einer Laminier-Anlage im Durchlauf mit der Polymerlage - verpresst. Hierbei ist zu beachten, dass die Konversionsbeschichtung bis zum Fügen mit der Polymerlage nicht chemisch und nicht mechanisch beansprucht wird, um die Konversionsbeschichtung hierdurch nicht zu beschädigen. Die erfindungsgemäße Konversionsbeschichtung auf der Oberfläche der metallischen Lage, die mit der Polymerlage vorzugsweise direkt verbunden wird, liefert die erforderliche Haftung für einen dauerhaften Verbund zwischen der verfestigten Polymerlage und der metallischen Lage.

Insbesondere wenn solche Sandwichstrukturen als Komponenten weiter beschichtet oder als eine von mehreren Komponenten verbaut und danach beschichtet werden, ist ein Beschichten mit jeweils mindestens einem Nasslack, Elektrotauchlack wie z.B. einem kathodischen Elektrotauchlack KTL oder/und Pulverlack grundsätzlich möglich. Ein Beschichten mit einem Elektrotauchlack oder/und einem Pulverlack ist hierbei besonders vorteilhaft, weil hierbei auch hintergriffige und verdeckte Stellen lackiert werden können. Besonders bevorzugt sind Polymerlagen, die als temperaturstabile Polymerlage oder als temperaturstabile Polymer-Kernlage eingesetzt werden können. Solche Elektrotauchlacke werden häufig bei Temperaturen im Bereich von 15 bis 40 °C und meistens bei Temperaturen im Bereich von 25 bis 30 °C unter Einwirkung von Strom aufgebracht. Diese Elektrotauchlacke werden anschließend in einem Ofen bei Temperaturen oft von etwa 160 bis 180 °C eingebrannt. Außerdem können innerhalb der verschiedensten Lackbeschichtungen auch Lacke wie z.B. ein Decklack, ein Füller, ein Klarlack oder ein Pulverlack verwendet werden, die bei Temperaturen etwa im Bereich von 150 bis 240 °C eingebrannt werden kann. Daher bedeutet der Begriff "temperaturstabil" für eine Polymerlage der vorliegenden Erfindung, dass sie den Einbrenntemperaturen im Einbrennofen ohne nachteiligen Einfluss auf ihre Eigenschaften standhalten. Daher können insgesamt jeweils mindestens ein Elektrotauchlack, Decklack, Füller, Klarlack oder/und Pulverlack auf mindestens einer Seite des Verbundes oder Laminats aufgetragen werden.

Die erfindungsgemäße Sandwichstruktur kann bei Bedarf jeweils mindestens einmal beschichtet, verformt, beklebt, zusammengepresst oder/und anderweitig gefügt werden. Aus derartigen Sandwichstrukturen können beispielsweise Karosserieteile hergestellt werden, z.B. durch Schneiden, Verformen, Lackieren oder/und Fügen, wobei die Reihenfolge dieser Schritte variiert werden kann.

### Überraschungseffekte:

Es war überraschend, dass durch den Zusatz von Polyacrylsäure im Bereich von 1 bis 3 g/L deutlich höhere Schälzugfestigkeitswerte erzielt werden konnten als bei den bisher getesteten oder/und verwendeten Konversionszusammensetzungen.

Es war außerdem überraschend, dass die Konversionszusammensetzung auf allen so unterschiedlichen metallischen Substraten wie z.B. CRS, Z, ZE, ZnMg, ZnAlMg, Edelstahl und Al eine ausreichende Haftung zwischen metallischer Oberfläche und Polymerlage erzeugte.

Es war ferner überraschend, dass die Konversionsbeschichtung auch auf der nicht mit einer Polymerlage verbundenen Seite des Metallbleches eine nachfolgende kathodische Elektrotauchlackbeschichtung (KETL) nicht störte.

Es war vorteilhaft, dass zwei nacheinander ausgeführte Konversionsbeschichtungen auf eine einzige zurückgeführt werden konnte, wodurch zwei bis 4 Prozessschritte eingespart werden können. Neben dieser Vereinfachung des Herstellverfahrens konnte auch eine deutliche Steigerung der Schälzugfestigkeit erzielt werden.

Die erfindungsgemäß hergestellten und die erfindungsgemäßen Sandwichstrukturen können im Fahrzeugbau, im Flugzeugbau, in der Raumfahrt, im Apparatebau, im Maschinenbau, im Bauwesen, im Möbelbau oder als Konstruktionselemente verwendet werden.

Die erfindungsgemäßen Sandwichstrukturen können insbesondere verwendet werden als Teile von Fahrzeugen, Anhängern, Wohnmobilen oder Flugkörpern, als Teile von Karosserien, als Elemente von Türen, Heckklappen oder Motorhauben, als Stoßstangen, als Leitplanken, für elektrotechnische Geräte, für Haushaltsgeräte, für Außenverkleidungen, als Fassadenelemente, als Dachverkleidungen, als Garagentürelemente, als Zaunelemente, im Innenausbau, als Heizkörper, als Lampen, für Möbelstücke oder als Möbelelemente, für Schrankelemente oder Regale, als Bänder, als Bleche, als Profile, als Formteile, als Abdeckungen, als Verkleidungen, als Abschirmungen, als Gestelle, als Isolationselemente, als Sicherheitselemente, als Träger oder als Gehäuse.

### Beispiele und Vergleichsbeispiele:

Der Gegenstand der Erfindung wird anhand von Ausführungsbeispielen beispielhaft näher erläutert:
Den Beispielen liegen die im Folgenden aufgeführten Substrate bzw. Verfahrensschritte zugrunde:

### Folgende Bleche wurden geprüft:

A) Aluminiumlegierung AlMg3 5754 W19,
B) kaltgewalztes durchlaufgeglühtes Stahlblech (CRS) aus unlegiertem Stahl DC04B,
C) beidseitig elektrolytisch verzinktes Feinblech (ZE) in Automobilqualität, Güte DX54 DZ100,
D) feuerverzinktes nachgewalztes Blech (Z) aus weichem unlegierten Stahl der Güte DX53 mit mindestens 100 g/m² Zinkauflage,
E) Edelstahl (StS) der Güte 1.4301,
F) Magnesiumlegierung AZ31 und
G) Magnesiumlegierung AM50,
jeweils mit einer Dicke von ca. 0,2 bis 1 mm je nach metallischem Werkstoff und Versuch.
1. Die Substratoberflächen der Bleche wurden in einer 2 %-igen wässerigen Lösung eines stark-alkalischen Reinigers über 10 bis 20 s bei 55 bis 60 °C gereinigt und hierbei gründlich entfettet.
2. Es folgte ein Spülen mit Leitungswasser über 0,5 Minuten bei Raumtemperatur.
3. Es wurden verschiedenartige wässerige Konversionszusammensetzungen entsprechend Tabelle 1 bereitgestellt, die alle außer bei VB37 eine gute Badstabilität aufwiesen. Die hierbei verwendeten Salze werden auf der zweiten und dritten Tabellenseite genannt, wobei immer nur eine von mehreren der genannten Zink-Verbindungen zugesetzt wurde. Als Polyacrylsäure wurde eine in Wasser gelöste haftvermittelnde Formulierung mit Polyacrylsäure-Polymer mit einem mittleren Molekulargewicht im Bereich von 50.000 bis 70.000 eingesetzt. Als Epoxysilan 1 wurde 3-Glycidoxypropyltrimethoxysilan im vorhydrolysierten Zustand verwendet. Als Aminosilan 1 wurde N-(2-(Aminoethyl)-3-aminopropyltrimethoxysilan im vorhydrolysierten Zustand verwendet. Die Konversionszusammensetzungen zeigten einen pH-Wert im Bereich von 2 bis 3.
4. Bei vielen Versuchen wurden mehrere verschiedenartige metallische Substrate nacheinander und ansonsten in gleicher Weise behandelt und unter einer Nummer eines Beispiels bzw. Vergleichsbeispiels zur besseren Übersichtlichkeit in Tabelle 1 zusammengefasst.
5. Danach wurden die Oberflächen der in Tabelle 1 unter Substrate genannten verschiedenartigen Bleche bei Raumtemperatur mit einem Laborcoater beschichtet, wobei ein Nassfilm von ca. 3,5 ml/m² aufgebracht wurde.
6. Dann wurden die beschichteten Substrate im Trockenofen bei 180 °C über 20 bis 30 s bei einer peak-metal-Temperatur PMT von 60 °C getrocknet, wobei der Nassfilm ohne vorheriges Spülen aufgetrocknet wurde.
7. An den getrockneten konversionsbeschichteten Substraten wurde das Schichtgewicht für das chemische Element Phosphor mit einer Röntgenfluoreszenzanalyseeinrichtung (RFA) zur Ermittlung des P₂O₅-Gehalts bestimmt. Bei den Beispielen B1 bis B6 wurden Schichtgewichte für die Konversionsbeschichtung im Bereich von 20 bis 60 mg/m² P₂O₅ in getestet, während bei den weiteren Beispielen und Vergleichsbeispielen ein Schichtgewicht im Bereich von 10 bis 150 mg/m² P₂O₅ genutzt wurde. Tabelle 1 gibt Auszüge hiervon wieder.
8. Als Polymerlagen wurden KTL-temperaturstabile Lagen aus einem Verbundwerkstoff (Compound) aus Polyamid PA 6 mit einem Anteil an PE eingesetzt, das heißt aus einem Polyamid auf Basis von ε-Caprolactam bzw. ω-Aminocapronsäure und aus Polyethylen mit einer Dicke im Bereich von 0,05 bis 1,00 mm.
9. Jeweils eine Polymerlage wurde als Zwischenschicht zwischen zwei gleichartigen metallischen, erfindungsgemäß konversionsbeschichteten metallischen Lagen in einer Plattenpresse ohne gezieltes Vorwärmen bei einer Belastung mit einer Temperatur von gegebenenfalls bis zu 240 °C drucklos über 60 s miteinander verpresst und dadurch zu einer dauerhaften Sandwichstruktur verbunden. Hierbei schmolz zumindest ein Teil des insbesondere thermoplastischen Werkstoffs auf und bildete beim Abkühlen über die erfindungsgemäße Konversionsbeschichtung einen haftfesten Verbund.
10. Nach dem Abkühlen wurden Schälzugfestigkeitswerte nach ISO 11335, 2010, ermittelt, wobei Dreifachmessungen pro Sandwichstruktur an entsprechenden Proben geprüft wurden. Die verwendeten Abschnitte aus der Sandwichstruktur zeigten 4 cm Breite und 13 cm Länge und sollten mindestens 300N/4cm Schälzugfestigkeit, d.h. mindestens 75N/cm, in der Schälzugfestigkeitsprüfung nach ISO 11339, 2010, ergeben.

**Tabelle 1: Zusammensetzung und Eigenschaften der wässerigen Konversionszusammensetzungen, der Konversionsbeschichtungen und der hiermit hergestellten Sandwichstrukturen**

| | B1 | B2 | B3 | B4 | B5 | B6 | B7 | B8 | B9 | B10 | B11 | B12 | | | |
|---|---|---|---|---|---|---|---|---|---|---|---|---|---|---|---|
| Substrate | Z/ZE | | | CRS/StS | | | Z/ZE/CRS/AL/StS | | | Z/ZE | | | | | |
| | Badzusammensetzung in g/L, Rest: Wasser | | | | | | | | | | | | | | |
| Zn | 3,33 | 3,33 | 3,33 | 6,86 | 6,86 | 6,86 | 8,76 | 8,76 | 8,76 | 1,72 | 1,72 | 1,72 | | | |
| Mn | 2,02 | 2,02 | 2,02 | 4,03 | 4,03 | 4,03 | 5,15 | 5,15 | 5,15 | 1,01 | 1,01 | 1,01 | | | |
| Ni | 0,69 | 0,69 | 0,69 | 1,37 | 1,37 | 1,37 | 1,75 | 1,75 | 1,75 | 0,34 | 0,34 | 0,34 | | | |
| Mo | 0,10 | 0,10 | 0,10 | 0,10 | 0,10 | 0,10 | 0,10 | 0,10 | 0,10 | 0,10 | 0,10 | 0,10 | | | |
| P₂O₅ | 19,15 | 19,15 | 19,15 | 38,30 | 38,30 | 38,30 | 48,86 | 48,86 | 48,86 | 9,57 | 9,57 | 9,57 | | | |
| PO₄ | 25,62 | 25,62 | 25,62 | 51,24 | 51,24 | 51,24 | 65,39 | 65,39 | 65,39 | 12,81 | 12,81 | 12,81 | | | |
| Zn : PO₄ | 0,13 | 0,13 | 0,13 | 0,13 | 0,13 | 0,13 | 0,13 | 0,13 | 0,13 | 0,13 | 0,13 | 0,13 | | | |
| Polyacrylsäure | 1,28 | 2,56 | 1,59 | 1,28 | 2,56 | 1,59 | 1,28 | 2,56 | 1,59 | 1,28 | 2,56 | 1,59 | | | |
| Epoxysilan 1 | | | 1,56 | | | 1,56 | | | 1,56 | | | 1,56 | | | |
| Schichtgewicht P₂O₅ mg/m² | 20 - 60 | | | 40 - 120 | | | 50 - 150 | | | 10 - 30 | | | | | |
| Schälzugfestigkeit N/4cm | 500-750 | 500-750 | 400-500 | 300-400 | 300-400 | 350-650 | 300-400 | 300-400 | 350-650 | 200-350 | 200-350 | 400-500 | | | |

| | B13 | B14 | B15 | B16 | B17 | B18 | B19 | B20 | B21 | B22 | B23 | | | | |
|---|---|---|---|---|---|---|---|---|---|---|---|---|---|---|---|
| Substrate | CRS/StS | | | Z/ZE | CRS/StS | Z/ZE | | | CRS/StS | | | | | | |
| zugesetzt als | Badzusammensetzung in g/L, Rest: Wasser | | | | | | | | | | | | | | |
| Zn als ZnO+ZnCO₃ | 3,33 | 3,33 | 3,33 | 3,33 | 6,86 | 3,33 | 3,33 | 3,33 | 6,86 | 6,86 | 6,86 | | | | |
| Mn als Mn₃(PO₄)₂ | 2,02 | 2,02 | 2,02 | 2,02 | 4,03 | 2,02 | 2,02 | 2,02 | 4,03 | 4,03 | 4,03 | | | | |
| Ni als NiCO₃ | 0,69 | 0,69 | 0,69 | | | 0,69 | 0,69 | 0,69 | 1,37 | 1,37 | 1,37 | | | | |
| Al als AlPO₄ | | | | | | 0,18 | 0,18 | 0,18 | | | | | | | |
| CrIII als Cr(NO₃)₃ | | | | | | | | | 0,20 | 0,40 | 0,20 | | | | |
| Mo [(NH₄)₆Mo₇O₂₄·4H₂O] | 0,10 | 0,10 | 0,10 | 0,10 | 0,10 | | | | | | | | | | |
| NO₃ als NaNO₃ | | | | | | | 0,60 | 0,60 | | | | | | | |
| P₂O₅ | 19,15 | 19,15 | 19,15 | 19,15 | 38,3 | 19,15 | 19,15 | 19,15 | 38,30 | 38,30 | 38,30 | | | | |
| PO₄ | 25,62 | 25,62 | 25,62 | 25,62 | 51,24 | 25,62 | 25,62 | 25,62 | 51,24 | 51,24 | 51,24 | | | | |
| Zn : PO₄ | 0,13 | 0,13 | 0,13 | 0,13 | 0,13 | 0,13 | 0,13 | 0,13 | 0,13 | 0,13 | 0,13 | | | | |
| Polyacrylsäure | 1,28 | 2,56 | 1,59 | 2,56 | 2,56 | 1,28 | 2,56 | 1,59 | 1,28 | 2,56 | 1,59 | | | | |
| Epoxysilan 1 | | | 1,56 | | | | | 1,56 | | | 1,56 | | | | |
| Aminosilan 1 | | | | | | | | | | | 0,20 | | | | |
| Schichtgewicht P₂O₅ mg/m² | 20 - 60 | | | 20 - 60 | 20 - 60 | 20 - 60 | | | 40 - 120 | | | | | | |
| Schälzugfestigkeit N/4cm | 400-500 | 400-500 | 400-500 | 500-750 | 300-400 | 500-750 | n.b. | 400-500 | n.b | n.b | n.b | | | | |

| | B24 | B25 | B26 | B27 | B28 | B29 | B30 | B31 | B32 | B33 | B34 | | | | |
|---|---|---|---|---|---|---|---|---|---|---|---|---|---|---|---|
| Substrate | Z/ZE/CRS/AL/StS | | | Z/ZE | | | CRS/StS | | | | Z/ZE | | | | |
| zugesetzt als | Badzusammensetzung in g/L, Rest: Wasser | | | | | | | | | | | | | | |
| Zn als ZnO+ZnCO₃ | 8,76 | 8,76 | 8,76 | 1,72 | 1,72 | 1,72 | 3,33 | 3,33 | 3,33 | 3,33 | 6,86 | | | | |
| Mn als Mn₃(PO₄)₂ | 5,15 | 5,15 | 5,15 | 1,01 | 1,01 | 1,01 | 2,02 | 2,02 | 2,02 | 2,02 | 4,03 | | | | |
| Ni als NiCO₃ | 1,75 | 1,75 | 1,75 | | | 0,34 | 0,69 | 0,69 | 0,69 | | | | | | |
| Co als Co(NO₃)₂·4H₂O | | | | 0,34 | 0,34 | | | | | | | | | | |
| FeIII [Fe(NO₃)₃·9H₂O] | | | | | 0,20 | | | | 0,20 | | 0,40 | | | | |
| Mg als Mg₃(PO₄)₂ | | | | | | 0,30 | 0,60 | | | | | | | | |
| Mo [(NH₄)₆Mo₇O₂₄·4H₂O] | 0,10 | | 0,10 | | | | | | | | | | | | |
| V als NaVO₃ - W als Na₂WO₄ | | 0,20 W | | 0,10 V | | | | | | | | | | | |
| H₂O₂ | | | | | | | | | 0,0002 | | 0,0004 | | | | |
| NO₂ als NaNO₂ | | | | | | | | 0,002 | | | | | | | |
| NO₃ als NaNO₃ | | | | | 0,60 | | | | 0,60 | | 0,60 | | | | |
| P₂O₅ | 48,86 | 48,86 | 48,86 | 9,57 | 9,57 | 9,57 | 19,15 | 19,15 | 19,15 | 19,15 | 38,3 | | | | |
| PO₄ | 65,39 | 65,39 | 65,39 | 12,81 | 12,81 | 12,81 | 25,62 | 25,62 | 25,62 | 25,62 | 51,24 | | | | |
| Zn : PO₄ | 0,13 | 0,13 | 0,13 | 0,13 | 0,13 | 0,13 | 0,13 | 0,13 | 0,13 | 0,13 | 0,13 | | | | |
| Polyacrylsäure | 1,28 | 2,56 | 1,59 | 1,28 | 2,56 | 1,59 | 1,28 | 2,56 | 1,59 | 2,56 | 2,56 | | | | |
| Epoxysilan 1 | | | 1,56 | | | 1,56 | | | 1,56 | | | | | | |
| Schichtgewicht P₂O₅ mg/m² | 50 - 150 | | | 10 - 30 | | | 20 - 60 | | | | 40 - 120 | | | | |
| Schälzugfestigkeit N/4cm | 300-400 | n.b. | 350-650 | 200-350 | 200-350 | 400-500 | 200-320 | 200-320 | 200-320 | 300-420 | 300-400 | | | | |

| | B35 | B36 | VB37 | B38 | B39 | B40 | B41 | B42 | B43 | VB44 | VB45 | VB46 | B47 | VB48 | VB49 |
|---|---|---|---|---|---|---|---|---|---|---|---|---|---|---|---|
| Substrate | Z/ZE | | | | | | | | | | | | | | |
| | Badzusammensetzung in g/L, Rest: Wasser | | | | | | | | | | | | | | |
| Zn | 1,28 | 6,41 | 12,81 | 3,33 | 3,33 | 3,33 | 3,33 | 3,33 | 3,33 | 3,33 | 3,33 | 3,33 | 3,33 | 3,33 | 3,33 |
| Mn | 2,02 | 2,02 | 2,02 | 2,02 | 2,02 | 2,02 | 2,02 | 2,02 | 2,02 | 2,02 | 2,02 | 2,02 | 2,02 | 2,02 | 2,02 |
| Mo | 0,10 | | | 0,10 | 0,10 | 0,10 | 0,10 | 0,10 | 0,10 | 0,10 | 0,10 | 0,10 | 0,10 | 0,10 | 0,10 |
| P₂O₅ | 19,15 | 19,15 | 19,15 | 19,15 | 19,15 | 19,15 | 19,15 | 19,15 | 19,15 | 19,15 | 19,15 | 19,15 | 19,15 | 19,15 | 19,15 |
| PO₄ | 25,62 | 25,62 | 25,62 | 25,62 | 25,62 | 25,62 | 25,62 | 25,62 | 25,62 | 25,62 | 25,62 | 25,62 | 25,62 | 25,62 | 25,62 |
| Zn : PO₄ | 0,05 | 0,25 | 0,50 | 0,13 | 0,13 | 0,13 | 0,13 | 0,13 | 0,13 | 0,13 | 0,13 | 0,13 | 0,13 | 0,13 | 0,13 |
| Polyacrylsäure | 1,59 | 1,59 | 1,59 | 0,30 | 1,56 | 3,00 | 0,30 | 1,56 | 3,00 | 5,50 | 7,50 | 10,00 | 1,59 | 1,59 | |
| Epoxysilan 1 | | | | 0,20 | 0,20 | 0,20 | 3,00 | 3,00 | 3,00 | | | | 3,50 | 6,00 | |
| Schichtgewicht P₂O₅ mg/m² | 20 - 60 | | | | | | | | | | | | | | |
| Schälzugfestigkeit N/4cm | 300-650 | 300-650 | n.b. | 250-400 | 400-800 | 400-800 | 250-400 | 400-800 | 300-600 | 250-400 | 200-300 | 150-250 | 400-800 | 250-400 | 150-250 |

Tabelle 1 verdeutlicht, dass auf allen der sehr unterschiedlichen metallischen Substratwerkstoffe mit der erfindungsgemäßen wässerigen Konversionszusammensetzung Sandwichstrukturen mit exzellenten oder guten Werte der Schälzugfestigkeit erreicht wurden und dass sogar bei Nickel-freien Konversionszusammensetzungen sehr gute Werte erzielt wurden.

Die Beispiele B1 bis B6 zeigen exzellente Ergebnisse, die Beispiele B7 bis B17 sehr gute Ergebnisse. Die Beispiele B18 bis B43 verdeutlichen bei einer Schälzugfestigkeit von mehr als 300 N/4cm gute Ergebnisse, so dass insgesamt in einem breiten chemischen Feld der wässerigen Konversionszusammensetzungen gute Sandwichstrukturen herstellbar sind. Die Vergleichsbeispiele VB44 bis VB46 und VB48 zeigen weniger gute Ergebnisse, da offenbar für diese wässerigen Zusammensetzungen zu hohe Gehalte an Polyacrylsäure bzw. an Silan zugesetzt wurden.

Niedrigere Schichtgewichte ergaben hierbei üblicherweise eine bessere Schälzugfestigkeit als höhere Schichtgewichte. Die erfindungsgemäßen Sandwichstrukturen zeigten eine hervorragende Schälzugfestigkeit. Sie erfüllen auch die sehr hohen Anforderungen der Automobilindustrie bezüglich des Fügeverhaltens, der Korrosionsbeständigkeit, der Umformbarkeit und Überlackierbarkeit, wie in weiteren, hier nicht dargestellten Tests ermittelt wurde.

Erste Versuche mit dem erfindungsgemäßen Verfahren ergaben, dass die verzinkten Stahlbleche Z und ZE jetzt beide unter gleichen Bedingungen und ohne eine zusätzliche zweite Konversionsbeschichtung erfolgreich beschichtet und zu Sandwichstrukturen weiterverarbeitet werden können. Auch die Prozeßstabilität der Vorbereitung der metallischen Oberflächen, der wässerigen Konversionszusammensetzung und des Konversionsbeschichtens war höher als bei den früheren Versuchen, was sich in insgesamt hohen Schälzugfestigkeitswerten zeigte. Es zeigte sich eine höhere Badstabilität der Konversionszusammensetzung, die sich auch auf gleichmäßigere Beschichtungen auswirkte, die daher auch noch bessere Eigenschaftswerte aufwiesen.

## Patentansprüche

1. Verfahren zur Herstellung einer Sandwichstruktur auf Basis von mindestens einer Lage von metallischem Werkstoff und von mindestens einer Lage von organischem Polymer, **dadurch gekennzeichnet, dass** mindestens eine Oberfläche an mindestens einer metallischen Lage, die mit mindestens einer Lage von organischem Polymer verbunden werden soll, mit einer wässerigen Konversionszusammensetzung in Kontakt gebracht wird, die enthält:
0,5 bis 20 g/L Zink,
0,01 bis 10 g/L Mangan, 0,01 bis 10 g/L Aluminium, 0,01 bis 1 g/L Chrom(III), 0,01 bis 5 g/L Eisen(II), 0,01 bis 5 g/L Eisen(III) oder/und 0,01 bis 5 g/L Magnesium,
0 oder 0,01 bis 5 g/L der Summe an Nickel oder/und Kobalt,
0 oder 0,01 bis 5 g/L der Summe an Molybdän, Tantal, Vanadium oder/und Wolfram,
2 bis 100 g/L P₂O₅, die 2,68 bis 133,8 g/L PO₄ entsprechen,
0,1 bis 10 g/L Polyacrylsäure, jedoch nicht mehr als 25 % des Gehalts der Zusammensetzung an P₂O₅ in g/L, und
0 oder 0,01 bis 3 g/L Silan, jedoch nicht mehr als 25 % des Gehalts der Zusammensetzung an P₂O₅ in g/L,
dass der hiermit hergestellte Flüssigkeitsfilm aufgetrocknet wird,
dass die derart beschichtete metallische Lage gegebenenfalls geschnitten wird und dass die derart beschichtete metallische Lage mit mindestens einer Lage auf Basis von organischem Polymer in Kontakt gebracht und durch Verpressen unter Druck oder/und Temperatur zu einer Sandwichstruktur verbunden wird.

2. Verfahren nach Anspruch 1, **dadurch gekennzeichnet, dass** die wässerige Konversionszusammensetzung folgende Zusammensetzung aufweist:
1 bis 10 g/L Zink,
0,5 bis 6 g/L Mangan, 0,01 bis 0,5 g/L Aluminium, 0,01 bis 0,8 g/L Chrom(III), 0,01 bis 1 g/L Eisen(II), 0,01 bis 1 g/L Eisen(III) oder/und 0,01 bis 1,5 g/L Magnesium,
0 oder 0,01 bis 2,5 g/L Nickel, 0 oder 0,01 bis 2,5 g/L Kobalt, wobei die Summe an Nickel und Kobalt 0 ist oder im Bereich von 0,01 bis 4 g/L liegt,
0 oder 0,01 bis 5 g/L der Summe an Molybdän oder/und Vanadium,
8 bis 60 g/L P₂O₅, die 10,72 bis 80,28 g/L PO₄ entsprechen,
0,5 bis 5 g/L Polyacrylsäure, jedoch nicht mehr als 25 % des Gehalts der Zusammensetzung an P₂O₅ in g/L, und
0 oder 0,01 bis 3 g/L Silan, jedoch nicht mehr als 25 % des Gehalts der Zusammensetzung an P₂O₅ in g/L und auch keinen Gehalt an einem Komplexfluorid von Titan oder Zirkonium.

3. Verfahren nach Anspruch 1 oder 2, **dadurch gekennzeichnet, dass** die wässerige Konversionszusammensetzung folgende Zusammensetzung aufweist:
2 bis 8 g/L Zink,
1 bis 5 g/L Mangan, 0,01 bis 0,2 g/L Aluminium, 0,01 bis 0,5 g/L Chrom(III), 0,01 bis 0,5 g/L Eisen(II), 0,01 bis 0,5 g/L Eisen(III) oder/und 0,01 bis 0,8 g/L Magnesium,
0 oder 0,01 bis 2 g/L Nickel,
0 oder 0,01 bis 2 g/L Kobalt, wobei die Summe an Nickel und Kobalt nicht größer als 2,5 g/L ist,
0 oder 0,01 bis 5 g/L der Summe an Molybdän oder/und Vanadium,
9,5 bis 50 g/L P₂O₅, die 12,73 bis 66,9 g/L PO₄ entsprechen,
0,5 bis 3 g/L Polyacrylsäure, jedoch nicht mehr als 25 % des Gehalts der Zusammensetzung an P₂O₅ in g/L, und
0 oder 0,01 bis 2 g/L Silan, jedoch nicht mehr als 25 % des Gehalts der Zusammensetzung an P₂O₅ in g/L und auch keinen Gehalt an einem Komplexfluorid von Titan oder Zirkonium.

4. Verfahren nach mindestens einem der vorstehenden Ansprüche, **dadurch gekennzeichnet, dass** das Konversionsbeschichtungsverfahren ohne einen Aktivierungsschritt mit einem kolloidalen Titanphosphat oder mit einem Oberflächenkonditionierungsmittel auf Basis von Phosphatpartikeln erfolgt.

5. Verfahren nach mindestens einem der vorstehenden Ansprüche, **dadurch gekennzeichnet, dass** der Nassfilm der wässerigen Konversionszusammensetzung auf der metallischen Oberfläche homogen ausgebildet wird und dass die Kontaktzeit mit der wässerigen Konversionszusammensetzung bis zum vollständigen Auftrocknen kleiner als 1 Minute ist.

6. Verfahren nach mindestens einem der vorstehenden Ansprüche, **dadurch gekennzeichnet, dass** der hiermit hergestellte Flüssigkeitsfilm aufgetrocknet wird ohne dabei und ohne danach mit wässeriger Flüssigkeit zu spülen.

7. Verfahren nach mindestens einem der vorstehenden Ansprüche, **dadurch gekennzeichnet, dass** eine Konversionsbeschichtung mit einem Schichtgewicht von bis zu 0,4 g/m² gebildet wird.

8. Verfahren nach mindestens einem der vorstehenden Ansprüche, **dadurch gekennzeichnet, dass** die Konversionsbeschichtung in Form einer Mikrophosphatierung ausgebildet wird.

9. Verfahren nach mindestens einem der vorstehenden Ansprüche, **dadurch gekennzeichnet, dass** die Konversionsbeschichtung weitgehend oder gänzlich amorph ausgebildet ist.

10. Verfahren nach mindestens einem der vorstehenden Ansprüche, **dadurch gekennzeichnet, dass** die Lage aus organischem thermoplastischem Polymer ist, das gegebenenfalls auch faserverstärkt ist.

11. Verfahren nach mindestens einem der vorstehenden Ansprüche, **dadurch gekennzeichnet, dass** die Lage aus organischem Polymer eine auf Basis von Polyamid, Polyethylen oder/und Polypropylen ist, das gegebenenfalls aus thermoplastischem Kunststoff oder/und auch faserverstärkt ist.

12. Sandwichstruktur hergestellt mit einem Verfahren nach mindestens einem der Ansprüche 1 bis 11.

13. Sandwichstruktur nach Anspruch 12, **dadurch gekennzeichnet, dass** der Gehalt der aufgetrockneten oder/und der aufgetrockneten und beim Verpressen thermisch belasteten Konversionsbeschichtung an Polyacrylsäure oder/und ihren Reaktionsprodukten 0,05 bis 15 Gew.-% der Konversionsbeschichtung beträgt.

14. Sandwichstruktur nach mindestens einem der Ansprüche 12 oder 13, **dadurch gekennzeichnet, dass** der Gehalt der aufgetrockneten oder/und der aufgetrockneten und beim Verpressen thermisch belasteten Konversionsbeschichtung an mindestens einem Silan oder/und seinen/ihren Reaktionsprodukten 0,01 bis 15 Gew.-% der Konversionsbeschichtung beträgt.

15. Sandwichstruktur nach mindestens einem der Ansprüche 12 bis 14, **dadurch gekennzeichnet, dass** sie jeweils mindestens einmal beschichtet, verformt, beklebt, zusammengepresst oder/und anderweitig gefügt wird.

16. Verwendung der Sandwichstrukturen nach Anspruch 12 bis 15 oder Verwendung der nach dem Verfahren gemäß den Ansprüchen 1 bis 11 hergestellten Sandwichstrukturen im Fahrzeugbau, im Flugzeugbau, in der Raumfahrt, im Apparatebau, im Maschinenbau, im Bauwesen, im Möbelbau oder als Konstruktionselemente.

## Claims

1. A method for producing a sandwich structure based on at least one layer of metallic material and on at least one layer of organic polymer, wherein at least one surface on at least one metallic layer that is to be joined to at least one layer of organic polymer is contacted with an aqueous conversion composition which comprises:
0.5 to 20 g/l zinc,
0.01 to 10 g/l manganese, 0.01 to 10 g/l aluminum, 0.01 to 1 g/l chromium(III), 0.01 to 5 g/l iron(II), 0.01 to 5 g/l iron(III) and/or 0.01 to 5 g/l magnesium,
0 or 0.01 to 5 g/l of the total of nickel and/or cobalt,
0 or 0.01 to 5 g/l of the total of molybdenum, tantalum, vanadium and/or tungsten,
2 to 100 g/l P₂O₅, corresponding to 2.68 to 133.8 g/l of PO₄,
0.1 to 10 g/l polyacrylic acid, but not more than 25% of the P₂O₅ content of the composition in g/l, and
0 or 0.01 to 3 g/l silane, but not more than 25% of the P₂O₅ content of the composition in g/l,
wherein the film of liquid produced therewith is dried,
wherein the metallic layer thus coated is optionally cut, and wherein the metallic layer thus coated is contacted with at least one layer based on organic polymer and is joined by compaction under pressure and/or temperature to form a sandwich structure.

2. The method according to claim 1, wherein the aqueous conversion composition has the following composition:
1 to 10 g/l zinc,
0.5 to 6 g/l manganese, 0.01 to 0.5 g/l aluminum, 0.01 to 0.8 g/l chromium (III), 0.01 to 1 g/l iron(II), 0.01 to 1 g/l iron(III) and/or 0.01 to 1.5 g/l magnesium,
0 or 0.01 to 2.5 g/l nickel, 0 or 0.01 to 2.5 g/l cobalt, where the total of nickel and cobalt is 0 or is in the range from 0.01 to 4 g/l,
0 or 0.01 to 5 g/l of the total of molybdenum and/or vanadium,
8 to 60 g/l P₂O₅, corresponding to 10.72 to 80.28 g/l of PO₄,
0.5 to 5 g/l polyacrylic acid, but not more than 25% of the P₂O₅ content of the composition in g/l, and
0 or 0.01 to 3 g/l silane, but not more than 25% of the P₂O₅ content of the composition in g/l and also no content of a complex fluoride of titanium or zirconium.

3. The method according to claim 1 or 2, wherein the aqueous conversion composition has the following composition:
2 to 8 g/l zinc,
1 to 5 g/l manganese, 0.01 to 0.2 g/l aluminum, 0.01 to 0.5 g/l chromium(III), 0.01 to 0.5 g/l iron(II), 0.01 to 0.5 g/l iron(III) and/or 0.01 to 0.8 g/l magnesium,
0 or 0.01 to 2 g/l nickel,
0 or 0.01 to 2 g/l cobalt, where the total of nickel and cobalt is not greater than 2.5 g/l,
0 or 0.01 to 5 g/l of the total of molybdenum and/or vanadium,
9.5 to 50 g/l P₂O₅, corresponding to 12.73 to 66.9 g/l of PO₄,
0.5 to 3 g/l polyacrylic acid, but not more than 25% of the P₂O₅ content of the composition in g/l, and
0 or 0.01 to 2 g/l silane, but not more than 25% of the P₂O₅ content of the composition in g/l and also no content of a complex fluoride of titanium or zirconium.

4. The method according to at least one of the preceding claims, wherein the conversion coating method takes place without an activation step with a colloidal titanium phosphate or with a surface conditioner based on phosphate particles.

5. The method according to at least one of the preceding claims, wherein the wet film of the aqueous conversion composition is formed homogeneously on the metallic surface and wherein the contact time with the aqueous conversion composition until complete drying is less than one minute.

6. The method according to at least one of the preceding claims, wherein the film of liquid produced thereby is dried without being rinsed during drying and thereafter with aqueous liquid.

7. The method according to at least one of the preceding claims, wherein a conversion coating having a coat weight of up to 0.4 g/m² is formed.

8. The method according to at least one of the preceding claims, wherein the conversion coating is formed as a microphosphatization.

9. The method according to at least one of the preceding claims, wherein the conversion coating is largely or entirely amorphous in form.

10. The method according to at least one of the preceding claims, wherein the layer is of organic thermoplastic polymer which optionally is also fiber-reinforced.

11. The method according to at least one of the preceding claims, wherein the layer of organic polymer is one based on polyamide, polyethylene and/or polypropylene, which optionally is of thermoplastic material and/or else is fiber-reinforced.

12. A sandwich structure produced with a method according to at least one of claims 1 to 11.

13. The sandwich structure according to claim 12, wherein the content of polyacrylic acid and/or its reaction products in the dried conversion coating and/or in the dried conversion coating loaded thermally during compaction is 0.05 to 15% by weight of the conversion coating.

14. The sandwich structure according to at least one of claims 12 and 13, wherein the content of at least one silane and/or its/their reaction products in the dried conversion coating and/or in the dried conversion coating loaded thermally during compaction is 0.01 to 15% by weight of the conversion coating.

15. The sandwich structure according to at least one of claims 12 to 14, which is in each case at least once coated, deformed, adhesive-treated, compressed and/or otherwise assembled.

16. The use of the sandwich structures according to claim 12 to 15 or use of the sandwich structures produced by the method according to claims 1 to 11 in vehicle construction, in aircraft construction, in space travel, in apparatus construction, in machine construction, in building construction, in furniture construction or as structural elements.

## Revendications

1. Procédé de fabrication d'une structure en sandwich à base d'au moins une couche d'un matériau métallique et d'au moins une couche d'un polymère organique, **caractérisé en ce qu'**au moins une surface d'au moins une couche métallique, qui doit être reliée avec au moins une couche d'un polymère organique, est mise en contact avec une composition de conversion aqueuse, qui contient :
0,5 à 20 g/l de zinc,
0,01 à 10 g/l de manganèse, 0,01 à 10 g/l d'aluminium, 0,01 à 1 g/l de chrome (III), 0,01 à 5 g/l de fer (II), 0,01 à 5 g/l de fer (III) et/ou 0,01 à 5 g/l de magnésium,
0 ou 0,01 à 5 g/l de la somme de nickel et/ou de cobalt,
0 ou 0,01 à 5 g/l de la somme de molybdène, de tantale, de vanadium et/ou de tungstène,
2 à 100 g/l de P₂O₅, qui correspondent à 2,68 à 133,8 g/l de PO₄,
0,1 à 10 g/l d'acide polyacrylique, mais toutefois pas plus de 25 % de la teneur de la composition en P₂O₅ en g/l, et
0 ou 0,01 à 3 g/l de silane, mais toutefois pas plus de 25 % de la teneur de la composition en P₂O₅ en g/l,
**en ce que** le film de liquide fabriqué avec celle-ci est séché,
**en ce que** la couche métallique ainsi revêtue est éventuellement découpée et **en ce que** la couche métallique ainsi revêtue est mise en contact avec au moins une couche à base d'un polymère organique et reliée en une structure sandwich par compression sous une pression et/ou une température.

2. Procédé selon la revendication 1, **caractérisé en ce que** la composition de conversion aqueuse présente la composition suivante :
1 à 10 g/l de zinc,
0,5 à 6 g/l de manganèse, 0,01 à 0,5 g/l d'aluminium, 0,01 à 0,8 g/l de chrome (III), 0,01 à 1 g/l de fer (II), 0,01 à 1 g/l de fer (III) et/ou 0,01 à 1,5 g/l de magnésium,
0 ou 0,01 à 2,5 g/l de nickel, 0 ou 0,01 à 2,5 g/l de cobalt, la somme de nickel et de cobalt étant de 0 ou dans la plage allant de 0,01 à 4 g/l,
0 ou 0,01 à 5 g/l de la somme de molybdène et/ou de vanadium,
8 à 60 g/l de P₂O₅, qui correspondent à 10,72 à 80,28 g/l de PO₄,
0,5 à 5 g/l d'acide polyacrylique, mais toutefois pas plus de 25 % de la teneur de la composition en P₂O₅ en g/l, et
0 ou 0,01 à 3 g/l de silane, mais toutefois pas plus de 25 % de la teneur de la composition en P₂O₅ en g/l, et également aucune teneur en un fluorure complexe de titane ou de zirconium.

3. Procédé selon la revendication 1 ou 2, **caractérisé en ce que** la composition de conversion aqueuse présente la composition suivante :
2 à 8 g/l de zinc,
1 à 5 g/l de manganèse, 0,01 à 0,2 g/l d'aluminium, 0,01 à 0,5 g/l de chrome (III), 0,01 à 0,5 g/l de fer (II), 0,01 à 0,5 g/l de fer (III) et/ou 0,01 à 0,8 g/l de magnésium,
0 ou 0,01 à 2 g/l de nickel,
0 ou 0,01 à 2 g/l de cobalt, la somme de nickel et de cobalt étant inférieure ou égale à 2,5 g/l,
0 ou 0,01 à 5 g/l de la somme de molybdène et/ou de vanadium,
9,5 à 50 g/l de P₂O₅, qui correspondent à 12,73 à 66,9 g/l de PO₄,
0,5 à 3 g/l d'acide polyacrylique, mais toutefois pas plus de 25 % de la teneur de la composition en P₂O₅ en g/l, et
0 ou 0,01 à 2 g/l de silane, mais toutefois pas plus de 25 % de la teneur de la composition en P₂O₅ en g/l, et également aucune teneur en un fluorure complexe de titane ou de zirconium.

4. Procédé selon au moins l'une quelconque des revendications précédentes, **caractérisé en ce que** le procédé de revêtement de conversion a lieu sans étape d'activation avec un phosphate de titane colloïdal ou avec un agent de conditionnement de surface à base de particules de phosphate.

5. Procédé selon au moins l'une quelconque des revendications précédentes, **caractérisé en ce que** le film humide de la composition de conversion aqueuse est formé de manière homogène sur la surface métallique, et **en ce que** le temps de contact avec la composition de conversion aqueuse jusqu'au séchage complet est inférieur à 1 minute.

6. Procédé selon au moins l'une quelconque des revendications précédentes, **caractérisé en ce que** le film de liquide fabriqué est séché sans rinçage simultané ou ultérieur avec un liquide aqueux.

7. Procédé selon au moins l'une quelconque des revendications précédentes, **caractérisé en ce qu'**un revêtement de conversion d'un poids de couche de jusqu'à 0,4 g/m² est formé.

8. Procédé selon au moins l'une quelconque des revendications précédentes, **caractérisé en ce que** le revêtement de conversion est configuré sous la forme d'une microphosphatation.

9. Procédé selon au moins l'une quelconque des revendications précédentes, **caractérisé en ce que** le revêtement de conversion est configuré essentiellement ou entièrement sous forme amorphe.

10. Procédé selon au moins l'une quelconque des revendications précédentes, **caractérisé en ce que** la couche est en un polymère thermoplastique organique, qui est éventuellement également renforcé par des fibres.

11. Procédé selon au moins l'une quelconque des revendications précédentes, **caractérisé en ce que** la couche en un polymère organique est à base de polyamide, polyéthylène et/ou polypropylène, qui est éventuellement à base d'un plastique thermoplastique et/ou qui est également renforcé par des fibres.

12. Structure en sandwich fabriquée par un procédé selon au moins l'une quelconque des revendications 1 à 11.

13. Structure en sandwich selon la revendication 12, **caractérisée en ce que** la teneur du revêtement de conversion séché et/ou séché et sollicité thermiquement lors de la compression en acide polyacrylique et/ou ses produits de réaction est de 0,05 à 15 % en poids du revêtement de conversion.

14. Structure en sandwich selon au moins l'une quelconque des revendications 12 ou 13, **caractérisée en ce que** la teneur du revêtement de conversion séché et/ou séché et sollicité thermiquement lors de la compression en au moins un silane et/ou ses produits de réaction est de 0,01 à 15 % en poids du revêtement de conversion.

15. Structure en sandwich selon au moins l'une quelconque des revendications 12 à 14, **caractérisée en ce qu'**elle est revêtue, déformée, collée, comprimée et/ou autrement assemblée, à chaque fois au moins à une reprise.

16. Utilisation des structures en sandwich selon les revendications 12 à 15 ou utilisation des structures en sandwich fabriquées par le procédé selon les revendications 1 à 11 dans la fabrication de véhicules, dans la fabrication d'aéronefs, dans l'astronautique, dans la fabrication d'équipements, dans la fabrication de machines, dans le bâtiment, dans la fabrication de meubles ou en tant qu'éléments de construction.
